# EUROPÄISCHE PATENTSCHRIFT

(11) **EP 0 704 482 B1**
(45) Veröffentlichungstag und Bekanntmachung des Hinweises auf die Patenterteilung: **07.10.1998**
(21) Anmeldenummer: 95110447.0
(22) Anmeldetag: 05.07.1995
(51) Int. Cl.: C08L 23/10, B32B 27/20

(54) **Kunststoffolie für Möbel oder Möbelteile sowie Verfahren zur Verarbeitung derselben**
Plastic film for furniture or their parts and process for their application
Revêtement plastique pour meuble ou parties des meubles et procédé de son application

(30) Priorität: 01.10.1994 DE 4435277
(43) Veröffentlichungstag der Anmeldung: 03.04.1996
(73) Patentinhaber: ALKOR GMBH KUNSTSTOFFE, D-81451 München (DE)
(72) Erfinder: Ewald, Egon, D-81671 München (DE); Schneider, Manfred, Dipl.-Ing., D-86928 Hagenheim (DE)
(74) Vertreter: Seiler, Siegfried

(56) Entgegenhaltungen:
- EP-A- 0 125 227
- EP-A- 0 213 441
- US-A- 4 704 431

## Beschreibung

Die vorliegende Erfindung betrifft eine Kunststoffolie für Möbel oder Möbelteile, enthaltend ein Polyolefin sowie mindestens einen anderen Kunststoff, der sich chemisch und/oder physikalisch von dem Polyolefin unterscheidet, sowie gegebenenfalls Pigmente und/oder Farbstoffe, Verarbeitungshilfsmittel, Füllstoffe und/oder andere Zusatzstoffe enthält. Die Kunststoffolie enthält Propylenhomo- und/oder -copolymerisat oder Mischungen oder Legierungen von Propylenhomo- und/oder -copolymerisat mit einem Polyethylen hoher Dichte (HDPE) oder mit einem Polyethylen sehr niedriger Dichte (LLDPE) in Kombination mit ganz bestimmten Gewichtsmengen mehrerer anderer Kunststoffe.

Aus der EP-A-0 213 441 ist bereits eine Polyolefinfolie oder Polyolefinfolienbahn für Möbel bekannt, die ein Gemisch oder eine Legierung aus 70 bis 97,5 Gew.-Teilen eines Propylenhomo- oder -copolymerisates und 30 bis 5 Gew.-Teilen Niederdruckpolyethylen, Polyvinylalkohol, Ethylen-Vinylalkohol-Copolymerisat, Ethylen-Acrylsäure-Copolymerisat, Acrylsäureester-Acrylsäureether-Polymerisat und/oder Polycaprolacton oder Mischungen bzw. Legierungen von Niederdruckpolyethylen mit einem oder mehreren der vorgenannten Polymerisate enthält und (bezogen auf 100 Gew.-Teile der Kunststoffmischung bzw. -legierung) 50 bis 150 Gew.-Teile eines feinteiligen mineralischen Füllstoffes oder mineralischen Füllstoffgemisches, von dem mehr als 60 Gew.-% (bezogen auf 100 Gew.-% eingesetzten bzw. enthaltenen Füllstoff) mindestens eine reaktive Substanz besitzen, wobei als reaktive Substanz eine polare und unpolare Gruppen aufweisende Substanz in Gewichtsmengen von 0,5 bis 10 Gew.-% verwendet wird,
die vorzugsweise auf der Oberfläche oder auf einem Teil der Oberfläche des Füllstoffes oder Füllstoffgemisches angeordnet ist. Diese Kunststoffolie ist sehr gut haftfest, bedruckbar und weist eine gute Oberflächenbeschaffenheit auf. Die Folie ist jedoch nicht oder nur sehr schlecht tiefziehfähig und im Thermoformverfahren schlecht bei Möbelteilen mit Oberflächendekoration verarbeitbar.

Aus anderen Anwendungsbereichen sind jedoch auch tiefziehfähige Polypropylen enthaltende Folien mit anderen Bestandteilen bekannt. Diese weisen jedoch für die Herstellung von Möbeln oder Möbelteilen erhebliche Nachteile auf. So besitzen diese eine schlechte Kratzfestigkeit, Eindruckfestigkeit oder Bedruckbarkeit.

Aus diesem Grund werden für das Thermoformverfahren zur Herstellung von Möbelteilen überwiegend PVC-Folien eingesetzt. Dabei werden die besonderen Eigenschaften von PVC ausgenutzt wie zum Beispiel die gute Thermoformbarkeit über einen breiten Temperaturbereich, eine sehr gute Kratzfestigkeit und Eindruckfestigkeit und dergleichen.

Aus Umweltschutzgründen sind jedoch in zahlreichen Bereichen, insbesondere auch im Innenbereich von Häusern, für Möbel oder Möbelteile, PVC-Teile nicht mehr erwünscht.

Ziel und Aufgabe der vorliegenden Erfindung war es daher, eine polyolefinhaltige Folie oder Folienbahn für Möbel oder Möbelteile zu entwickeln, die die vorgenannten Nachteile nicht aufweist. Die Folie sollte auch im Thermoformverfahren für Möbel oder Möbelteile gut verarbeitbar sein und eine Tiefziehfähigkeit besitzen. Die Folie sollte innerhalb eines breiten Temperaturbereiches diese gute Verarbeitbarkeit aufweisen, eine gute Kratzfestigkeit und Eindruckfestigkeit besitzen, gut bedruckbar und/oder verklebbar und gut aufbringbar auf Möbel oder Möbelteile, Holzwerkstoffplatten und dergleichen sein.

Erfindungsgemäß wurde festgestellt, daß diesen Zielen und Aufgaben eine Kunststoffolie für Möbel oder Möbelteile gerecht wird, die Polyolefin sowie mindestens zwei andere Kunststoffe, die sich chemisch und/oder physikalisch von dem Polyolefin unterscheiden, sowie gegebenenfalls Pigmente und/oder Farbstoffe, Verarbeitungshilfsmittel, Füllstoffe und/oder andere Zusatzstoffe enthält. Gemäß der Erfindung besteht die Kunststoffolie für Möbel oder Möbelteile (als Kunststoff oder Kunststoffanteil) aus
a) 30 bis 80 Gew.-Teile Propylenhomo- und/oder -copolymerisat oder Mischungen oder Legierungen von Propylenhomo- und/oder -copolymerisat mit einem Polyethylen hoher Dichte (HDPE) oder mit einem Polyethylen sehr niedriger Dichte (LLDPE),
b) 0 bis 15 Gew.-Teile mindestens eines gekrafteten oder gepfropften Polypropylens oder Propylencopolymerisates, mit einem Propylen- oder Polypropylengehalt von mehr als 50 Gew.-% (bezogen auf 100 Gew.-Teile des gekrafteten oder gepfropften Polypropylens oder Propylencopolymerisates), das in einer bevorzugten Ausführungsform als weiteren Bestandteil Styrol-, Methacrylsäure- oder Methacrylsäureestergruppen, Acrylsäure- oder Acrylsäureestergruppen, Acrylnitril-, Styrol-Acrylnitril-Gruppen oder ein oder mehrere dieser Polymerisate oder Verbindungen als Bestandteil (Pfropfbestandteil) zu mehr als 8 Gew.-% (bezogen auf das gekraftete oder gepfropfte Polymerisat b enthält,
c) 10 bis 45 Gew.-Teile eines Polymerisates oder Polymerisatgemisches, ausgewählt aus der Gruppe Polystyrol, Polymethylmethacrylat (PMMA), Styrol-Acrylnitril-Co- oder -Pfropfpolymerisat (SAN), Acrylnitril-Butadien-Styrol-Co- oder -Pfropfpolymerisat (ABS) und/oder ASA und
d) 1 bis 15 Gewichtsteile eines thermoplastischen Elastomeren oder Elastomergemisches, ausgewählt aus der Gruppe SEBS, SBS, PE-PP-Elastomer oder EPM und/oder EPDM, das
e) 0 bis 10 Gew.-Teile mindestens eine Maleinsäure oder Maleinsäureanhydrid (MAH) enthaltende Verbindung, ein Homo- oder Mischpolymerisat und/oder Pfropfpolymerisat derselben und/oder mindestens eine Azidosulfobenzoesäure (ASB) enthaltende Verbindung, ein Homo- oder Mischpolymerisat und/oder Pfropfpolymerisat enthält oder die Möbelfolie enthält diese Kunststoffbestandteile.

Gemäß einer bevorzugten Ausführungsform weist das gekraftete oder gepfropfte Polypropylencopolymerisat b einen Polypropylengehalt von 60 bis 80 Gew.-% (bezogen auf 100 Gew.-Teile des gekrafteten oder gepfropften Polypropylencopolymerisates b) und einen Polystyrol- und/oder PMMA- und/oder SAN-Gehalt von 40 bis 20 Gew.-%, vorzugsweise 35 bis 25 Gew.-%, auf.

Da im Rahmen der vorliegenden Erfindung Kunststoffolien auch für hochbeanspruchte Möbelfronten hergestellt werden sollen (z.B. Küchen), muß die Oberfläche dieser Kunststoffolien möglichst hart und kratzfest sein. Würde man daher nur einen Bestandteil der Kunststoffolie (z.B. den Bestandteil a) mit einem anderen Bestandteil (z.B. den Bestandteil d) kombinieren, so wären die daraus hergestellten Folien für das Anwendungsgebiet bzw. das Verfahren nicht geeignet. Die mit Bestandteil a (z.B. Polypropylen) mit dem Bestandteil d (z.B. SEBS oder SBS) hergestellten Folien allein würden beispielsweise zu weich sein und die Tiefziehfähigkeit wäre nicht ausreichend.

Durch die erfinderische Kombination werden die vorteilhaften gewünschten Eigenschaften, so zum Beispiel die gute Tiefziehfähigkeit, möglichst harte und kratzfeste der Oberflächen der Folien und dgl. erzielt. Gemäß der Erfindung ist es nicht erforderlich, Kunststoffe mit besonders reaktiven Substanzen, die auf den Füllstoffen angeordnet sind, in den Folien einzusetzen. Die erfindungsgemäße Folie oder Verbundfolie für Möbel ist gut verarbeitbar, bedruckbar und sehr haftfest sowie leicht herstellbar.

Nach einer bevorzugten Ausführungsform der Erfindung enthält die Kunststoffolie (bezogen auf die Gewichtsmengen des Bestandteiles a) 25 bis 40 Gew.-Teile c Polystyrol, Polymethylmethacrylat (PMMA), Styrol-Acrylnitril-Co- oder -Pfropfpolymerisat (SAN), Acrylnitril-Butadien-Styrol-Co- oder -Pfropfpolymerisat (ABS) und/oder ASA.

Nach einer weiteren bevorzugten Ausführungsform enthält die Kunststoffolie (bezogen auf die Gewichtsanteile des Bestandteiles a) d 2,5 bis 10 Gew.-Teile SEBS, SBS, PE-PP-Elastomer oder EPM und/oder EPDM, vorzugsweise SEBS, worin e 0,2 bis 7 Gew.-Teile mindestens eine Maleinsäure oder Maleinsäureanhydrid (MAH enthaltende Verbindung, ein Homo- oder Mischpolymerisat und/oder Pfropfpolymerisat und/oder mindestens eine Axidosulfobenzoesäure (ASB) enthaltende Verbindung, ein Homo- oder Mischpolymerisat und/oder Pfropfpolymerisat enthalten sind, wobei die Bestandteile d und e vorzugsweise ein Mischpolymerisat oder ein Polymerisatgemisch und/oder ein Pfropfpolymerisat von SEBS, SBS, PE-PP-Elastomer, EPM und/oder ASB oder eines deren Polymerisate ist.

Die Kunststoffolie enthält bevorzugt als Bestandteil a 30 bis 80 Gew.-Teile, vorzugsweise 35 bis 75 Gew.-Teile, eines Gemisches bestehend aus 55 bis 92 Gew.-%, vorzugsweise 60 bis 85 Gew.-%, Propylenhomopolymerisat und 45 bis 8 Gew.-%, vorzugsweise 40 bis 15 Gew.-% HDPE und/oder LLDPE, vorzugsweise HDPE.

Gemäß einer erfinderischen Kombination besteht die Kunststoffolie (bezogen auf Kunststoff) aus
a) 35 bis 75 Gew.-Teilen a, vorzugsweise PP und HDPE
b) 0 bis 10 Gew.-Teilen, vorzugsweise 0,1 bis 9 Gew.-Teilen, gepfropften PP-Polystyrol, PP-PMMA und/oder PP-SAN,
c) 25 bis 40 Gew.-Teilen Polystyrol, PMMA, SAN, ABS oder ASA und
d) 2,5 bis 10 Gew.-Teilen SEBS, worin e 0,25 bis 6 Gew.-Teile mindestens eine Maleinsäure oder Maleinsäureanhydrid (MAH) enthaltende Verbindung, ein Homo- oder Mischpolymerisat und/oder Pfropfpolymerisat und/oder mindestens eine Azidosulfobenzoesäure (ASB) enthaltende Verbindung, ein Homo- oder Mischpolymerisat und/oder Pfropfpolymerisat enthalten sind, wobei die Bestandteile d und e vorzugsweise ein Mischpolymerisat oder Polymerisatgemisch und/oder ein Pfropfpolymerisat von SEBS und Maleinsäure, Maleinsäureanhydrid (MAH) und/oder ASB oder eines deren Polymerisate ist.

Die Folie enthält bevorzugt je 100 Gew.-Teile der Kunststoffmischung a, b, c, d und e 0 bis 50 Gewichtsteile, vorzugsweise 0,2 bis 40 Gewichtsteile, mindestens eines Füllstoffes oder Füllstoffgemisches.

Weiterhin enthält die Kunststoffolie in einer bevorzugten Ausführungsform je 100 Gew.-Teile der Kunststoffmischung a, b, c, d und e 0,1 bis 15 Gew.-Teile, vorzugsweise 0,5 bis 10 Gew.-Teile, Verarbeitungshilfs- und/oder Zusatzmittel (ausgenommen Füllstoffe), vorzugsweise Gleitmittel, Farbstoffe und/oder Farbpigmente, Wärmestabilisatoren, Antioxidantien, UV-Stabilisatoren und/oder Flammschutzmittel.

Nach einer bevorzugten Ausführungsform ist auf der Kunststoffolie eine Oberflächenschicht, vorzugsweise eine Oberflächenlackschicht oder Oberflächenfarblackschicht, oder mindestens eine Druckschicht oder Farbdruckschicht und mindestens eine transparente oder transluzente Oberflächenlackschicht und/oder Kunststoffoberflächenfolie angeordnet. Nach einer bevorzugten Ausführungsform enthält die erfindungsgemäße Kunststoffolie oder bedruckte Kunststoffolie eine einschichtige (vorzugsweise PMMA-Folie), zwei- oder dreischichtige Kunststoffoberfläche. Vorzugsweise ist die Kunststoffolie vor der Bedruckung und/oder Beschichtung oberflächenbehandelt oder coronabehandelt und/oder die Kunststoffolie ist unter Verwendung eines Kalanders oder Extruders hergestellt.

Die vorliegende Erfindung betrifft weiterhin ein Verfahren zum Verarbeiten einer Kunststoffolie für Möbel oder Möbelteile, enthaltend ein Polyolefin sowie mindestens zwei andere Kunststoffe, die sich chemisch und/oder physikalisch von dem Polyolefin unterscheiden, sowie gegebenenfalls Pigmente und/oder Farbstoffe, Verarbeitungshilfsmittel, Füllstoffe und/oder andere Zusatzstoffe, wobei die Kunststoffolie unter Mitverwendung eines Klebstoffes und/oder einer auf der Rückseite der Kunststoffolie aufgebrachten Beschichtung oder Primerschicht auf das Holzteil oder den Holzwerkstoff aufgebracht wird. Gemäß der Erfindung wird dabei eine Kunststoffolie verwendet, die als Kunststoff oder Kunststoffanteil aus
a) 30 bis 80 Gew.-Teile Propylenhomo- und/oder -copolymerisat oder Mischungen oder Legierungen von Propylenhomo- und/oder -copolymerisat mit einem Polyethylen hoher Dichte (HDPE) oder mit einem Polyethylen sehr niedriger Dichte (LLDPE),
b) 0 bis 15 Gew.-Teile mindestens eines gekrafteten oder gepfropften Polypropylens oder Propylencopolymerisates, mit einem Propylen- oder Polypropylengehalt von mehr als 50 Gew.-% (bezogen auf 100 Gew.-Teile des gekrafteten oder gepfropften Polypropylens oder Propylencopolymerisates), das als weiteren Bestandteil Styrol-, Methacrylsäure- oder Methacrylsäureestergruppen, Acrylsäure- oder Acrylsäureestergruppen, Acrylnitril-, Styrol-Acrylnitril-Gruppen oder ein oder mehrere dieser Polymerisate oder Verbindungen als Bestandteil (Pfropfanteil) zu mehr als 8 Gew.-% (bezogen auf das gekraftete oder gepfropfte Polymersiat b enthält,
c) 10 bis 45 Gew.-Teile eines Polymerisates oder Polymerisatgemisches, ausgewählt aus der Gruppe Polystyrol, Polymethylmethacrylat (PMMA), Styrol-Acrylnitril-Co- oder -Pfropfpolymerisat (SAN), Acrylnitril-Butadien-Styrol-Co- oder -Pfropfpolymerisat (ABS) und/oder ASA und
d) 1 bis 15 Gew.-Teile eines thermoplastischen Elastomeren oder Elastomergemisches, ausgewählt aus der Gruppe SEBS, SBS, PE-PP-Elastomer oder EPM und/oder EPDM enthält, das
e) 0 bis 10 Gew.-Teile mindestens eine Maleinsäure oder Maleinsäureanhydrid (MAH) enthaltende Verbindung, ein Homo- oder Mischpolymerisat und/oder Pfropfpolymerisat und/oder mindestens eine Azidosulfobenzoesure (ASB) enthaltende Verbindung, ein Homo- oder Mischpolymerisat und/oder Pfropfpolymerisat enthalt,
besteht oder diese Bestandteile enthält.

Die Kunststoffolie wird vor der Verarbeitung und/oder bei der Aufbringung erhitzt und im Thermoformverfahren auf das vorbereitete oder vorbearbeitete Holzteil oder Holzwerkstoffteil aufgebracht. Bevorzugt wird dabei die Kunststoffolie erhitzt und verformt oder vorgeformt und auf das vorbearbeitete, gefräste oder profilierte Holzwerkstoffteil aufgeklebt.

Nach einer bevorzugten Ausführungsform wird eine Kunststoffolie verwendet, bei der das gekraftete oder gepfropfte Polypropylencopolymerisat b einen Polypropylengehalt von 60 bis 80 Gew.-% (bezogen auf 100 Gew.-Teile des gekrafteten oder gepfropften Polypropylencopolymerisates b) und einen Polystyrol- und/oder PMMA- und/oder SAN-Gehalt von 40 bis 20 Gew.-%, vorzugsweise 35 bis 25 Gew.-%, aufweist.

Nach einer weiteren bevorzugten Ausführungsform des erfindungsgemäßen Verfahrens wird bei dem Verfahren eine Kunststoffolie verwendet, die (bezogen auf die Gewichtsmengen des Bestandteiles a) je 25 bis 40 Gew.-Teile c Polystyrol, Polymethylmethacrylat (PMMA), Styrol-Acrylnitril-Co- oder -Pfropfpolymerisat (SAN), Acrylnitril-Butadien-Styrol-Co- oder -Pfropfpolymerisat (ABS) und/oder ASA enthält.

Nach einer anderen bevorzugten Ausführungsform enthält die verwendete Kunststoffolie (bezogen auf die Gewichtsanteile des Bestandteiles a je 2,5 bis 10 Gewichtsteile d SEBS, SBS, PE-PP-Elastomer oder EPM und/oder EPDM, vorzugsweise SEBS, worin e 0,2 bis 7 Gew.-Teile mindestens eine Maleinsäure oder Maleinsäureanhydrid (MAH) enthaltende Verbindung, ein Homo- oder Mischpolymerisat und/oder Pfropfpolymerisat und/oder mindestens eine Azidosulfobenzoesäure (ASB) enthaltende Verbindung, ein Homo- oder Mischpolymerisat und/oder Pfropfpolymerisat enthalten sind, wobei die Bestandteile d und e vorzugsweise ein Mischpolymerisat oder ein Polymerisatgemisch und/oder ein Pfropfpolymerisat von SEBS, SBS, PE-PP-Elastomer, EPM und/oder EPDM und Maleinsäure, Maleinsäureanhydrid (MAH) und/oder ASB oder eines deren Polymerisate ist.

Bevorzugt enthält nach einer weiteren Ausführungsform die verwendete Kunststoffolie als Bestandteil a 30 bis 80 Gew.-Teile, vorzugsweise 35 bis 75 Gew.-Teile, eines Gemisches, bestehend aus 55 bis 92 Gew.-%, vorzugsweise 60 bis 85 Gew.-%, Propylenhomopolymerisat und 45 bis 8 Gew.-%, vorzugsweise 40 bis 15 Gew.-% Polyethylen hoher Dichte (HDPE) und/oder Polyethylen sehr niedriger Dichte (LLDPE), vorzugsweise HDPE.

Nach einer vorzugsweisen Ausführungsform wird bei dem Verfahren eine Kunststoffolie verwendet, die (bezogen auf Kunststoff) aus
a) 35 bis 75 Gew.-Teilen a, vorzugsweise PP und HDPE,
b) 0 bis 10 Gew.-Teilen, vorzugsweise 0,1 bis 9 Gew.-Teilen, gepfropften PP-Polystyrol, PP-PMMA und/oder PP-SAN,
c) 25 bis 40 Gew.-Teilen Polystyrol, PMMA, SAN, ABS oder ASA und
d) 2,5 bis 10 Gew.-Teilen SEBS, besteht, worin
e) 0,25 bis 6 Gew.-Teile mindestens eine Maleinsäure oder Maleinsäureanhydrid (MAH) enthaltende Verbindung, ein Homo- oder Mischpolymerisat und/oder Pfropfpolymerisat und/oder mindestens eine Azidosulfobenzoesäure (ASB) enthaltende Verbindung, ein Homo- oder Mischpolymerisat und/oder Pfropfpolymerisat enthalten sind, wobei die Bestandteile d und e vorzugsweise ein Mischpolymerisat oder ein Polymerisatgemisch und/oder ein Pfropfpolymerisat von SEBS und Maleinsäure, Maleinsäureanhydrid (MAH) und/oder ASB oder eines deren Polymerisate ist.

Dabei wird in einer bevorzugten Ausführungsform eine Kunststoffolie verwendet, die je 100 Gew.-Teile der Kunststoffmischung a, b, c, d und e 0 bis 50 Gewichtsteile, vorzugsweise 0,2 bis 40 Gewichtsteile, mindestens eines Füllstoffes enthält und/oder je 100 Gew.-Teile der Kunststoffmischung a, b, c, d und e 0,1 bis 15 Gew.-Teile, vorzugsweise 0,5 bis 10 Gew.-Teile, Verarbeitungshilfs- und/oder Zusatzmittel (ausgenommen Füllstoffe), vorzugsweise Gleitmittel, Farbstoffe und/oder Farbpigmente, Wärmestabilisatoren, Antioxidantien, UV-Stabilisatoren und/oder Flammschutzmittel enthält. Auf die Kunststoffolie wird in einer bevorzugten Ausführungsform eine Oberflächenschicht, vorzugsweise eine Oberflächenlackschicht oder Oberflächenfarblackschicht oder Kunststoffoberflächenfolie, oder mindestens eine Druckschicht oder Farbdruckschicht und mindestens eine transparente oder transluzente Oberflächenlackschicht oder Kunststoffoberflächenfolie aufgebracht. Vorzugsweise wird die Kunststoffolie oder bedruckte Kunststoffolie im Verbund mit einer zwei- oder dreischichtigen Kunststoffoberfolie verwendet oder mit einer einschichtigen Kunststoffoberfolie, vorzugsweise PMMA-Folie. Die Kunststoffolie wird vor der Bedruckung und/oder Beschichtung oberflächen- oder coronabehandelt. Sie wird unter Verwendung eines Kalanders oder Extruders hergestellt, bevor diese Arbeitsgänge erfolgen.

Nach einer bevorzugten Ausführungsform wird die Kunststoffolie unter Anwendung von Wärme und Druck und/oder Unterdruck auf einer Membranformpresse bei Temperaturen von mindestens 90 °C, vorzugsweise 100 bis 180 °C, verarbeitet und unter Mitverwendung von Klebstoff unter Einhaltung einer Preß- und Verklebungszeit von 1/10 bis 10 Min., vorzugsweise 0,5 bis 5 Min., mit dem Holzteil oder Holzwerkstoffteil, vorzugsweise dem profilierten, gefrästen, profilgefrästen oder oberflächenbehandelten Holzwerkstoffteil oder Holzteil, verbunden.

Nach diesem Verfahren wird die Folie vorgeheizt bzw. vorgewärmt, vorzugsweise unter Verwendung Infrarotstrahlern, und dann in der Membranformpresse unter Einhaltung der vorgenannten Temperaturen verformt. Die geformte Folie wird danach auf die vorgeformten, profilierten oder gefrästen Holzwerkstoffe (MDF-Platten) oder oberflächenbehandelten Holzwerkstoffteile oder Holzteile aufgeklebt. Dabei werden an sich bekannte Klebstoffbeschichtungen oder reaktive Klebstoffe, vorzugsweise jedoch Klebstoffdispersionen, vorzugsweise Polyurethandispersionen, eingesetzt. Dabei wird die Klebstoffdispersion unter Zusatz von Vernetzungsmitteln eingestellt. Zum Ablüften des Klebstoffes werden meistens 10 Min. bis 4 Std., vorzugsweise durchschnittlich 20 Min. bis 3 Std., bei Raumtemperatur benötigt. Nachdem die Verformung und Verklebung in der Membranpresse unter Einhaltung einer Aktivierungstemperatur von mindestens 90 °C mit einer bevorzugten durchschnittlichen Preßzeit von 1 bis 3 Min. eingehalten wurde, wird die auf die Holzwerkstoffplatte oder das Holzteil aufgebrachte Klebefolie verformt und abgekühlt. Bevorzugt erfolgt ein Versäumen der überstehenden Folie.

Nach einer anderen bevorzugten Ausführungsform wird die erfindungsgemäße Kunststoffolie mit der strukturierten Fläche oder Oberflächenschicht der Holzplatte, der Holzwerkstoffplatte oder des Formkörperteiles mittels mindestens eines Klebstoffes oder Leimes unter Druck verbunden und verpreßt und bei dem Verpressen auf die Kunststoffolie oder Kunststoffolienbahn mindestens ein elastisches oder nahezu elastisches Preßpolster oder eine Preßpolsterschicht verwendet, das bzw. die die Kunststoffolie oder Kunststoffolienbahn konturengetreu oder nahezu konturengetreu in und/oder auf die Vertiefungen, Erhöhungen und/oder Strukturierungen drückt. Bei dem Verpressen und den Verklebungen kann hier auch bei einer niedrigeren Temperatur, zum Beispiel 60 bis 120 °C, gearbeitet werden, bevorzugt werden jedoch auch hier Temperaturen von 20 bis 115 °C angewendet.

Bevorzugt ist die Dicke des elastischen Preßpolsters oder der elastischen Preßpolsterschicht größer als die Tiefe und/oder Höhe der strukturierten Oberflächenschichten auf der Holzplatte, Holzwerkstoffplatte oder dem Formkörperteil. Das Preßpolster oder die Preßpolsterschicht weist nach einer bevorzugten Ausführungsform eine Dicke von 1 bis 15 mm, vorzugsweise 3 bis 10 mm, auf und hat eine Shore A-Härte von 20 bis 80, vorzugsweise von 30 bis 50.

Nach einer anderen bevorzugten Ausführungsform des erfindungsgemäßen Verfahrens wird die Kunststoffolie bei erhöhten Temperaturen im Tiefziehverfahren vorgeformt und auf das Holzteil oder Holzwerkstoffteil, vorzugsweise auf das profilierte, gefräste, profilgefräste oder oberflächenbehandelte Holzwerkstoffteil oder Holzteil mit oder ohne Mitverwendung von Klebstoff aufgebracht.

Gemäß dieser Ausführungsform wird ebenfalls die erfindungsgemäße Kunststoffolie vorgewärmt bzw. vorgehitzt, bevorzugt mit Infrarotstrahlern, und danach im Tiefziehverfahren verformt oder vorgeformt und auf das Holzteil bzw. Holzwerkstoffteil, vorzugsweise profilierte, gefräste, profilgefräste oder oberflächenbehandelte Holzwerkstoffteil oder auf die gefräste Holzwerkstoffplatte (MDF-Platte) gebracht und mit oder ohne Verwendung von Klebstoff mit dem Holzwerkstoffteil verbunden.

### Ausführungsbeispiele

| | |
|---|---|
| **Abb. 1 - Schicht bzw. Folie 1** | |
| Beispiel 1 | 60 Teile PP-Homopolymerisat |
| | 20 Teile SAN |
| | 10 Teile ASA |
| | 5 Teile PP-g-AS |
| | 5 Teile SEBS + MAH gepfropft |
| | + Verarbeitungshilfsmittel |
| | + Farbstoffe |
| | |
| Beispiel 2 | 48 Teile PP-Homopolymerisat |
| | 12 Teile PE hoher Dichte |
| | 30 Teile Polystyrol |
| | 10 Teile SEBS + MAH gepfropft |
| | + Verarbeitungshilfsmittel |
| | + Farbstoffe |
| | |
| Beispiel 3 | 60 Teile PP-Homopolymerisat |
| | 30 Teile Polystyrol |
| | 5 Teile PP-g-PS |
| | 5 Teile PE Elastomer |
| | + Verarbeitungshilfsmittel |
| | + Farbstoffe |
| | |
| **Schicht bzw. Folie 2** | Polyurethan-Haftvermittler |
| **" " 3** | Vernetzter Acrylatlack |
| | |
| **Abb. 2 - Schicht bzw. Folie 1+2** | wie Beispiel 1 |
| **" "** | UV-härtender Lack |
| | |
| **Abb. 3 - Schicht bzw. Folie 1+2** | wie Beispiel 1 |
| **" " 3** | vernetzter Acrylatlack |
| **" " 4** | Druckschichten |
| **" " 5** | Acrylat-Haftvermittler |
| | |
| **Abb. 4 - Schicht bzw. Folie 1+2** | wie Beispiel 1 |
| **" " 3** | UV-härtender Lack |
| **" " 4** | Druckschichten |
| **" " 5** | Acrylat-Haftvermittler |
| | |
| **Abb. 5 - Schicht bzw. Folie 1+2** | wie Beispiel 1 |
| **" " 3** | vernetzter Acrylatlack |
| **" " 4** | Druckschichten |
| | |
| **Abb. 6 - Schicht bzw. Folie 1+2** | wie Beispiel 1 |
| **" " 3** | Druckschichten |
| **" " 4** | Acrylat-Haftvermittler |
| **" " 6+7** | coextrudierte Folie aus: |
| **" " 6** | |
| | |
| Beispiel 1 | Ethylenmethylacrylat |
| | |
| Beispiel 2 | 30 Teile PP-g-MAH |
| | 70 Teile Ethylenmethylacrylat |
| | |
| Beispiel 3 | 30 Teile PP-g-MAH |
| | 70 Teile Ethylenethylacrylat + |
| | 2,8 % MAH |
| | |
| Beispiel 4 | 30 Teile PP-g-MAH |
| | 20 Teile EVA (28 % VA) |
| | 50 Teile Ethylenmethylacrylat |
| | |
| Beispiel 5 | 30 Teile PP-g-MAH |
| | 20 Teile EVA (28 % VA) |
| | 50 Teile Ethylenethylacrylat + |
| | 2,8 % MAH |
| | |
| **Schicht bzw. Folie 7** | PP-Homopolymerisat |
| | |
| **Abb. 7 - Schicht bzw. Folie 1+2** | wie Beispiel 1 |
| **" " 5** | wie Beispiel 6 |
| **" " 4** | Druckschichten |
| **" " 5** | wie Beispiel 6 |
| **" " 6** | wie Beispiel 6 |
| **" " 7** | PP-Homopolymerisat |
| **" " 8** | 50 Teile PP-Homopolymerisat |
| | 50 Teile LLDPE |
| | |
| **Abb. 8 - Schicht bzw. Folie 1+2** | wie Beispiel 1 |
| **" " 5** | Acrylat-Haftvermittler |
| **" " 4** | Druckschichten |
| **" " 9** | Acrylatschicht |
| **" " 10** | PMMA-Schutzschicht |

### Zeichnungsbeschreibung

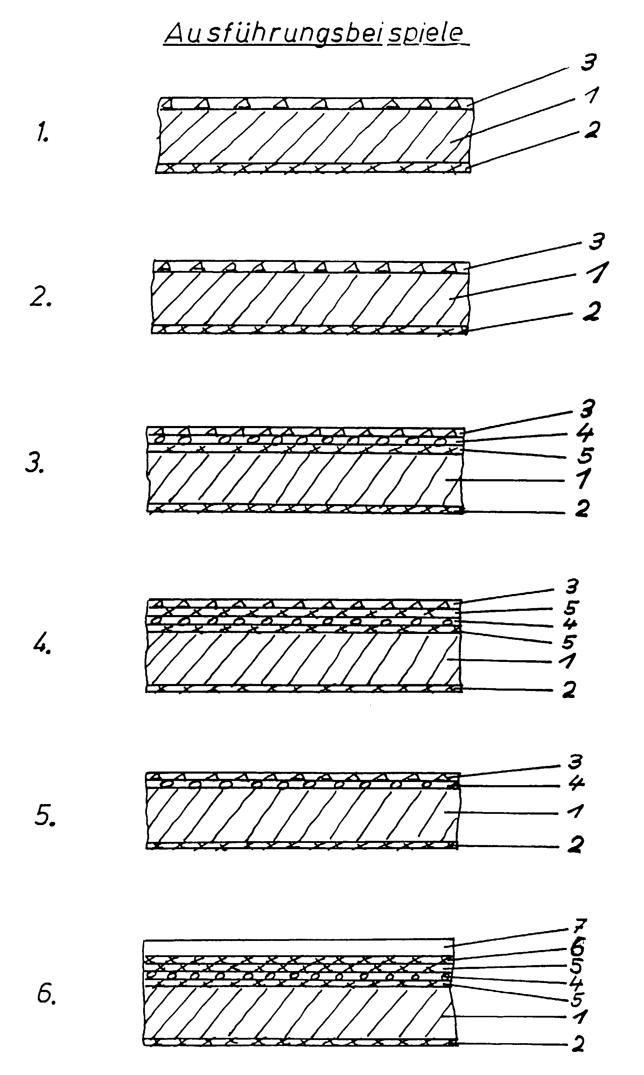

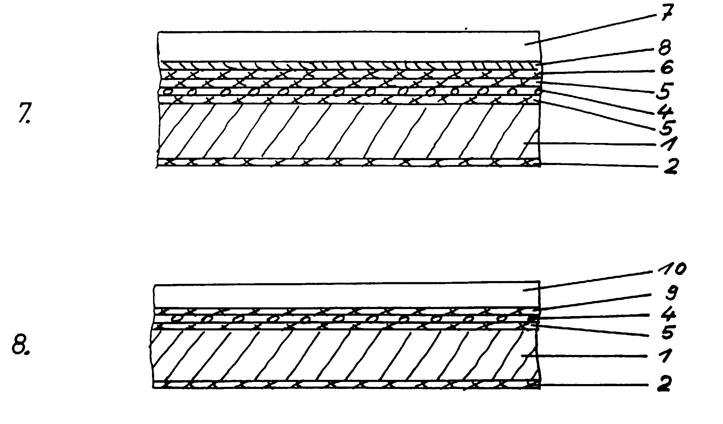

In der Abbildung 1 bis 8 sind schematisch bevorzugte Ausführungsformen der erfindungsgemäßen Kunststoffolie dargestellt. Die Zusammensetzungen der einzelnen Schichten sind durch die Beispiele erläutert, wobei die erfindungsgemäße Zusammensetzung der Folie oder Folienschicht mit "Schicht oder Folie 1", bei Doppel- oder Mehrfachschichten mit 1 und 2 wiedergegeben ist bzw. sind.

## Patentansprüche

1. Kunststoffolie für Möbel oder Möbelteile, enthaltend ein Polyolefin sowie mindestens zwei andere Kunststoffe, die sich chemisch und/oder physikalisch von dem Polyolefin unterscheiden, sowie gegebenenfalls Pigmente und/oder Farbstoffe, Verarbeitungshilfsmittel, Füllstoffe und/oder andere Zusatzstoffe, dadurch gekennzeichnet, daß die Kunststoffolie als Kunststoff oder Kunststoffanteil aus
a) 30 bis 80 Gew.-Teile Propylenhomo- und/oder -copolymerisat oder Mischungen oder Legierungen von Propylenhomo- und/oder -copolymerisat mit einem Polyethylen hoher Dichte (HDPE) oder mit einem Polyethylen sehr niedriger Dichte (LLDPE),
b) 0 bis 15 Gew.-Teile mindestens eines gekrafteten oder gepfropften Polypropylens oder Propylencopolymerisates, mit einem Propylen- oder Polypropylengehalt von mehr als 50 Gew.-% (bezogen auf 100 Gew.-Teile des gekrafteten oder gepfropften Polypropylens oder Propylencopolymerisates), das als weiteren Bestandteil
c) 10 bis 45 Gew.-Teileeines Polymerisates oder Polymerisatgemisches, ausgewählt aus der Gruppe Polystyrol, Polymethylmethacrylat (PMMA), Styrol-Acrylnitril-Co- oder -Pfropfpolymerisat (SAN), Acrylnitril-Butadien-Co- oder -Pfropfpolymerisat (ABS) und/oder ASA, und
d) 1 bis 15 Gewichtsteile eines thermoplastischen Elastomeren oder Elastomergemisches, ausgewählt aus der Gruppe SEBS, PE-PP-Elastomer oder EPM und/oder EPDM, das
e) 0 bis 10 Gewichtsteile mindestens eine Maleinsäure oder Maleinsäureanhydrid (MAH) enthaltende Verbindung, ein Homo- oder Mischpolymerisat und/oder Pfropfpolymerisat und/oder mindestens eine Azidosulfobenzoesaure (ASB) enthaltende Verbindung, ein Homo- oder Mischpolymerisat und/oder Pfropfpolymerisat enthält,
besteht oder diese Kunststoffbestandteile enthält.

2. Kunststoffolie nach Anspruch 1, dadurch gekennzeichnet, daß das gekraftete oder gepfropfte Polypropylencopolymerisat (b) einen Polypropylengehalt von 60 bis 80 Gew.-% (bezogen auf 100 Gew.-Teile des gekrafteten oder gepfropften Polypropylencopolymerisates (b) und einen Polystyrol- und/oder PMMA- und/oder SAN-Gehalt von 40 bis 20 Gew.-%, vorzugsweise 35 bis 25 Gew.-%, aufweist.

3. Kunststoffolie nach Ansprüchen 1 und 2, dadurch gekennzeichnet, daß die Kunststoffolie (bezogen auf die Gewichtsmengen des Bestandteiles (a))25 bis 40 Gew.- Teile (c) Polystyrol, Polymethylmethacrylat (PMMA), Styrol-Acrylnitril-Co- oder -Pfropfpolymerisat (SAN), Acrylnitril-Butadien-Styrol-Co- oder Pfropfpolymerisat (ABS) und/oder ASA enthält.

4. Kunststoffolie nach einem oder mehreren der Ansprüche 1 bis 3, dadurch gekennzeichnet, daß die Kunststoffolie (bezogen auf die Gewichtsanteile des Bestandteiles (a)) (d) 2,5 bis 10 Gewichtsteile SEBS, PE-PP-Elastomer oder EPM und/oder EPDM, vorzugsweise SEBS, enthält, worin (e) 0,2 bis 7 Gew.-Teile mindestens eine Maleinsäure oder Maleinsäureanhydrid (MAH) enthaltende Verbindung, ein Homo- oder Mischpolymerisat und/oder Pfropfpolymerisat und/oder mindestens eine Azidosulfobenzoesäure (ASB) enthaltende Verbindung, ein Homo- oder Mischpolymerisat und/oder Pfropfpolymerisat enthalten sind, wobei die Bestandteile (d) und (e) vorzugsweise ein Mischpolymerisat oder ein Polymerisatgemisch und/oder ein Pfropfpolymerisat von SEBS, PE-PP-Elastomer, EPM und/oder EPDM und Maleinsäure, Maleinsäureanhydrid (MAH) und/oder ASB oder eines deren Polymerisate ist.

5. Kunststoffolie nach einem oder mehreren der Ansprüche 1 bis 4, dadurch gekennzeichnet, daß die Kunststoffolie als Bestandteil (a) 30 bis 80 Gew.-Teile,vorzugsweise 35 bis 75 Gew.-Teile, eines Gemisches bestehend aus 55 bis 92 Gew.-%, vorzugsweise 60 bis 85 Gew.-%, Propylenhomopolymerisat und 45 bis 8 Gew.-%, vorzugsweise 40 bis 15 Gew.-%, HDPE und/oder LLDPE, vorzugsweise HDPE, enthält.

6. Kunststoffolie nach einem oder mehreren der Anspruche 1 bis 5, dadurch gekennzeichnet, daß die Kunststoffolie (bezogen auf Kunststoff) aus
a) 30 bis 75 Gew.-Teilen (a), vorzugsweise PP und HDPE
b) 0 bis 10 Gew.-Teilen, vorzugsweise 0,1 bis 9 Gew.-Teilen, gepfropften PP-Polystyrol, PP-PMMA und/oder PP-SAN,
c) 25 bis 40 Gew.-Teilen Polystyrol, PMMA, SAN, ABS oder ASA und
d) 2,5 bis 10 Gew.-Teilen SEBS, worin
e) 0,25 bis 6 Gew.-Teile mindestens eine Maleinsäure oder ein Maleinsäureanhydrid (MAH) enthaltende Verbindung, ein Homo- oder Mischpolymerisat und/oder Pfropfpolymerisat und/oder mindestens eine Azidosulfobenzoesäure (ASB) enthaltende Verbindung, ein Homo- oder Mischpolymerisat und/oder Pfropfpolymerisat enthalten sind, wobei die Bestandteile (d) und (e) vorzugsweise ein Mischpolymerisat oder ein Polymerisatgemisch und/oder Pfropfpolymerisat von SEBS und Maleinsäure, Maleinsäureanhydrid (MAH) und/oder ASB oder eines deren Polymerisate ist.

7. Kunststoffolie nach einem oder mehreren der Ansprüche 1 bis 6, dadurch gekennzeichnet, daß die Folie je 100 Gewichtsteile der Kunststoffmischung (a), (b), (c), (d) und (e) 0 bis 50 Gew.-Teile, vorzugsweise 0,2 bis 40 Gew.-Teile, mindestens eines Füllstoffes enthält.

8. Kunststoffolie nach einem oder mehreren der Ansprüche 1 bis 7, dadurch gekennzeichnet, daß die Kunststoffolie je 100 Gewichtsteile der Kunststoffmischaung (a), (b), (c), (d) und (e) 0,1 bis 15 Gew.-Teile, vorzugsweise 0,5 bis 10 Gew.-Teile, Verarbeitungshilfs- und/oder Zusatzmittel (ausgenommen Füllstoffe), vorzugsweise Gleitmittel, Farbstoffe und/oder Farbpigmente, Wärmestabilisatoren, Antioxidantien, UV-Stabilisatoren und/oder Flammschutzmittel, enthält.

9. Kunststoffolie nach einem oder mehreren der Ansprüche 1 bis 8, dadurch gekennzeichnet, daß auf der Kunststoffolie eine Oberflächenschicht, vorzugsweise eine Oberflächenlackschicht oder Oberflächenfarblackschicht, oder mindestens eine Druckschicht oder Farbdruckschicht und mindestens eine transparente oder transluzente Oberflächenlackschicht und/oder Oberflächenfolie aufgebracht ist.

10. Kunststoffolie nach einem oder mehreren der Ansprüche 1 bis 9, dadurch gekennzeichnet, daß die Kunststoffolie oder bedruckte Kunststoffolie eine ein-, zwei- oder dreischichtige Kunststoffoberfolie enthält.

11. Kunststoffolie nach einem oder mehreren der Ansprüche 1 bis 10, dadurch gekennzeichnet, daß die Kunststoffolie vor der Bedruckung und/oder Beschichtung oberflächenbehandelt oder coronabehandelt ist und/oder die Kunststoffolie unter Verwendung eines Kalanders oder Extruders hergestellt ist.

12. Verfahren zum Verarbeiten einer Kunststoffolie für Möbel oder Möbelteile, enthaltend ein Polyolefin sowie mindestens zwei andere Kunststoffe, die sich chemisch und/oder physikalisch von dem Polyolefin unterscheiden, sowie gegebenenfalls Pigmente und/oder Farbstoffe, Verarbeitungshilfsmittel, Füllstoffe und/oder andere Zusatzstoffe enthält, wobei die Kunststoffolie unter Mitverwendung eines Klebstoffes und oder einer auf der Rückseite der Kunststoffolie aufgebrachten Beschichtung oder Primerschicht auf das Holzteil oder den Holzwerkstoff aufgebracht wird, dadurch gekennzeichnet, daß die verwendete Kunststoffolie als Kunststoff oder Kunststoffanteil aus
a) 30 bis 80 Gew.-Teile Propylenhomo- und/oder -copolymerisat oder Mischungen oder Legierungen von Propylenhomo- und/oder -copolymerisat mit einem Polyethylen hoher Dichte (HDPE) oder mit einem Polyethylen sehr niedriger Dichte (LLDPE),
b) 0 bis 15 Gew.-Teilemindestens eines gekrafteten oder gepfropften Polypropylens oder Propylencopolymerisates, mit einem Propylen- oder Polypropylengehalt von mehr als 50 Gew.-% (bezogen auf 100 Gew.-Teile des gekrafteten oder gepfropften Polypropylens oder Propylencopolymerisates), das als weiteren Bestandteil Styrol-, Methacrylsäure- oder Methacrylsäureestergruppen, Acrylsäure- oder Acrylsäureestergruppen, Acrylnitril-, Styrol-Acrylnitril-Gruppen oder ein oder mehrere dieser Polymerisate oder Verbindungen als Bestandteil (Pfropfbestandteil) zu mehr als 8 Gew.-% (bezogen auf das gekraftete oder gepfropfte Polymerisat (b)) enthält,
c) 10 bis 45 Gew.-Teile eines Polymerisates oder Polymerisatgemisches, ausgewählt aus der Gruppe Polystyrol, Polymethylmethacrylat (PMMA), Styrol-Acrylnitril-Co- oder -Pfropfpolymerisat (SAN), Acrylnitril-Butadien-Styrol-Co- oder -Pfropfpolymerisat (ABS) und/oder ASA, und
d) 1 bis 15 Gewichtsteile eines thermoplastischen Elastomeren oder Elastomergemisches, ausgewählt aus der Gruppe SEBS, PE-PP-Elastomer oder EPM und/oder EPDM, das
e) 0 bis 10 Gewichtsteile mindestens eine Maleinsäure oder Maleinsäureanhydrid (MAH) enthaltende Verbindung, ein Homo- oder Mischpolymerisat und/oder Pfropfpolymerisat und/oder mindestens eine Azidosulfobenzoensäure (ASB) enthaltende Verbindung, ein Homo- oder Mischpolymerisat und/oder Pfropfpolymerisat enthält, besteht oder diese Bestandteile enthält, daß die Kunststoffolie vor der Verarbeitung und/oder bei der Aufbringung erhitzt und im Thermoformverfahren verarbeitet auf das vorbereitete oder vorbearbeitete Holzteil oder Holzwerkstoffteil aufgebracht wird.

13. Verfahren nach Anspruch 12, dadurch gekennzeichnet, daß die Kunststoffolie erhitzt und verformt oder vorgeformt und auf das vorbearbeitete, gefräste oder profilierte Holzwerkstoffteil aufgeklebt wird.

14. Verfahren nach Ansprüchen 12 und 13, dadurch gekennzeichnet, daß eine Kunststoffolie verwendet wird, bei der das gekraftete oder gepfropfte Polypropylencopolymerisat (b) einen Polypropylengehalt von 60 bis 80 Gew.-% (bezogen auf 100 Gew -Teile des gekrafteten oder gepfropften Polypropylencopolymerisates (b)) und einen Polystyrol- und/oder PMMA- und/oder SAN-Gehalt von 40 bis 20 Gew.-%, vorzugsweise 35 bis 25 Gew.-%, aufweist.

15. Verfahren nach einem oder mehreren der Ansprüche 12 bis 14, dadurch gekennzeichnet, daß die bei dem Verfahren verwendete Kunststoffolie (bezogen auf die Gewichtsmengen des Bestandteiles (a)) 25 bis 35 Gew.-Teile (c) Polystyrol, Polymethacrylat (PMMA), Styrol-Acrylnitril-Co- oder -Pfropfpolymerisat (SAN), Acrylnitril-Butadien-Styrol-Co- oder -Pfropfpolymerisat (ABS) und/oder ASA enthält.

16. Verfahren nach einem oder mehreren der Ansprüche 12 bis 15, dadurch gekennzeichnet, daß die Kunststoffolie (bezogen auf die Gewichtsanteile des Bestandteiles (a)) (d) 2,5 bis 10 Gewichtsteile SEBS, PE-PP-Elastomer oder EPM und/oder EPDM, vorzugsweise SEBS, enthält, worin (e) 0,2 bis 7 Gew.-Teile mindestens eine Maleinsäure oder Maleinsäureanhydrid (MAH) enthaltende Verbindung, ein Homo- oder Mischpolymerisat und/oder Pfropfpolymerisat und/oder mindestens eine Azidosulfobenzoesäure (ASB) enthaltende Verbindung, ein Homo- oder Mischpolymerisat und/oder Pfropfpolymerisat enthalten sind, wobei die Bestandteile (d) und (e) vorzugsweise ein Mischpolymerisat oder ein Polymerisatgemisch und/oder ein Pfropfpolymerisat von SEBS, PE-PP-Elastomer, EPM und/oder EPDM und Maleinsäure, Maleinsäureanhydrid (MAH) und/oder ASB oder eines deren Polymerisate ist.

17. Verfahren nach einem oder mehreren der Ansprüche 12 bis 16, dadurch gekennzeichnet, daß die verwendete Kunststoffolie als Bestandteil (a) 30 bis 80 Gew.-Teile, vorzugsweise 35 bis 75 Gew.-Teile, eines Gemisches, bestehend aus 55 bis 92 Gew.-%, vorzugsweise 60 bis 85 Gew.-%, Propylenhomopolymerisat und 45 bis 8 Gew.-%, vorzugsweise 40 bis 15 Gew.-%, HDPE und/oder LLDPE, vorzugsweise HDPE, enthält.

18. Kunststoffolie nach einem oder mehreren der Ansprüche 12 bis 17, dadurch gekennzeichnet, daß bei dem Verfahren eine Kunststoffolie verwendet wird, die (bezogen auf Kunststoff) aus
a) 30 bis 75 Gew.-Teilen (a), vorzugsweise PP und HDPE
b) 0 bis 10 Gew.-Teilen, vorzugsweise 0,1 bis 9 Gew.-Teilen, gepfropften PP-Polystyrol, PP-PMMA und/oder PP-SAN,
c) 25 bis 40 Gew.-Teilen Polystyrol, PMMA, SAN, ABS oder ASA und
d) 2,5 bis 10 Gew.-Teilen SEBS, worin
e) 0,25 bis 6 Gew.-Teile mindestens eine Maleinsäure oder ein Maleinsäureanhydrid (MAH) enthaltende Verbindung, ein Homo- oder Mischpolymerisat und/oder Pfropfpolymerisat und/oder mindestens eine Azidosulfobenzoesäure (ASB) enthaltende Verbindung, ein Homo- oder Mischpolymerisat und/oder Pfropfpolymerisat enthalten sind, wobei die Bestandteile (d) und (e) vorzugsweise ein Mischpolymerisat oder ein Polymerisatgemisch und/oder Pfropfpolymerisat von SEBS und Maleinsäure, Maleinsäureanhydrid (MAH) und/oder ASB oder eines deren Polymerisate ist.

19. Verfahren nach einem oder mehreren der Ansprüche 12 bis 18, dadurch gekennzeichnet, daß die verwendete Folie je 100 Gew.-Teile der Kunststoffmischung (a), (b), (c), (d) und (e) 0 bis 50 Gew.-Teile, vorzugsweise 0,2 bis 40 Gew.-Teile,mindestens eines Füllstoffes enthält und/oder daß die Kunststoffolie je 100 Gew.-Teile der Kunststoffmischung (a), (b), (c), (d) und (e) 0,1 bis 15 Gew.-Teile, vorzugsweise 0,5 bis 10 Gew.-Teile, Verarbeitungshilfs- und/oder Zusatzmittel (ausgenommen Füllstoffe), vorzugsweise Gleitmittel, Farbstoffe und/oder Farbpigmente, Wärmestabilisatoren, Antioxidantien, UV-Stabilisatoren und/oder Flammschutzmittel enthält.

20. Verfahren nach einem oder mehreren der Ansprüche 12 bis 19, dadurch gekennzeichnet, daß auf die Kunststoffolie eine Oberflächenschicht, vorzugsweise eine Oberflächenlackschicht oder Oberflächenfarblackschicht, oder mindestens eine Druckschicht oder Farbdruckschicht und mindestens eine transparente oder transluzente Oberflächenlackschicht und/oder Kunststoffoberflächenfolie aufgebracht wird.

21. Verfahren nach einem oder mehreren der Ansprüche 12 bis 20, dadurch gekennzeichnet, daß die Kunststoffolie oder bedruckte Kunststoffolie im Verbund mit einer ein-, zwei- oder dreischichtigen Kunststoffoberfolie verwendet wird.

22. Verfahren nach einem oder mehreren der Ansprüche 12 bis 21, dadurch gekennzeichnet, daß die Kunststoffolie vor der Bedruckung und/oder Beschichtung oberflächenbehandelt oder coronabehandelt wird und/oder die Kunststoffolie unter Verwendung eines Kalanders oder Extruders hergestellt wird.

23. Verfahren nach einem oder mehreren der Anspruche 12 bis 22, dadurch gekennzeichnet, daß die Kunststoffolie unter Anwendung von Wärme und Druck und/oder Unterdruck auf einer Membranformpresse bei Temperaturen von mindestens 90 °C, vorzugsweise 100 bis 180 °C, verarbeitet und unter Mitverwendung von Klebstoff unter Einhaltung einer Preß- und Verklebungszeit von 1/10 bis 10 Min., vorzugsweise 0,5 bis 5 Min., mit dem Holzteil oder Holzwerkstoffteil, vorzugsweise dem profilierten, gefrästen, profilgefrästen oder oberflächenbehandelten Holzwerkstoffteil oder Holzteil, verbunden wird.

24. Verfahren nach einem oder mehreren der Ansprüche 12 bis 23, dadurch gekennzeichnet, daß die Kunststoffolie bei erhöhten Temperaturen im Tiefziehverfahren vorgeformt und auf das Holzteil oder Holzwerkstoffteil, vorzugsweise auf das profilierte, gefräste, profilgefräste oder oberflächenbehandelte Holzwerkstoffteil oder Holzteil mit oder ohne Mitverwendung von Klebstoff aufgebracht wird.

## Claims

1. A plastics film for furniture or parts of furniture, containing a polyolefin and also at least two other plastics materials which differ chemically and/or physically from the polyolefin, and also optionally pigments and/or dyes, processing aids, fillers and/or other additives, characterised in that the plastics film consists of
a) 30 to 80 parts by weight propylene homopolymer and/or copolymer or mixtures or alloys of propylene homopolymer and/or copolymer with a polyethylene of high density (HDPE) or with a polyethylene of very low density (LLDPE),
b) 0 to 15 parts by weight of at least one grafted polypropylene or propylene copolymer, having a propylene or polypropylene content of more than 50% by weight (relative to 100 parts by weight of the grafted polypropylene or propylene copolymer), which [contains] as an additional constituent
c) 10 to 45 parts by weight of a polymer or polymer mixture, selected from the group polystyrene, polymethyl methacrylate (PMMA), styrene-acrylonitrile copolymer or graft polymer (SAN), acrylonitrile-butadiene copolymer or graft polymer (ABS) and/or ASA, and
d) 1 to 15 parts by weight of a thermoplastic elastomer or elastomer mixture, selected from the group SEBS, PE-PP elastomer or EPM and/or EPDM, which
e) contains 0 to 10 parts by weight of at least one compound containing maleic acid or maleic anhydride (MAH), a homopolymer or mixed polymer and/or graft polymer and/or at least one compound containing azidosulphobenzoic acid (ASB), a homopolymer or mixed polymer and/or graft polymer,
or contains these plastics constituents as plastics material or plastics content.

2. A plastics film according to Claim 1,
characterised in that the grafted polypropylene copolymer (b) has a polypropylene content of 60 to 80% by weight (relative to 100 parts by weight of the grafted polypropylene copolymer (b) and a polystyrene and/or PMMA and/or SAN content of 40 to 20% by weight, preferably 35 to 25% by weight.

3. A plastics film according to Claims 1 and 2, characterised in that the plastics film (relative to the quantities by weight of the constituent (a)) contains 25 to 40 parts by weight (c) polystyrene, polymethyl methacrylate (PMMA), styrene-acrylonitrile copolymer or graft polymer (SAN), acrylonitrile-butadiene-styrene copolymer or graft polymer (ABS) and/or ASA.

4. A plastics film according to one or more of Claims 1 to 3, characterised in that the plastics film (relative to the weight contents of the constituent (a)) (d) contains 2.5 to 10 parts by weight SEBS, PE-PP elastomer or EPM and/or EPDM, preferably SEBS, in which (e) 0.2 to 7 parts by weight of at least one compound containing maleic acid or maleic anhydride (MAH), a homopolymer or mixed polymer and/or graft polymer and/or at least one compound containing azidosulphobenzoic acid (ASB), a homopolymer or mixed polymer and/or graft polymer are contained, the constituents (d) and (e) preferably being a mixed polymer or a polymer mixture and/or a graft polymer of SEBS, PE-PP elastomer, EPM and/or EPDM and maleic acid, maleic anhydride (MAH) and/or ASB or one of the polymers thereof.

5. A plastics film according to one or more of Claims 1 to 4, characterised in that the plastics film contains as constituent (a) 30 to 80 parts by weight, preferably 35 to 75 parts by weight, of a mixture consisting of 55 to 92% by weight, preferably 60 to 85% by weight, propylene homopolymer and 45 to 8% by weight, preferably 40 to 15% by weight, HDPE and/or LLDPE, preferably HDPE.

6. A plastics film according to one or more of Claims 1 to 5, characterised in that the plastics film (relative to plastics material) consists of
a) 30 to 75 parts by weight (a), preferably PP and HDPE,
b) 0 to 10 parts by weight, preferably 0.1 to 9 parts by weight, grafted PP-polystyrene, PP-PMMA and/or PP-SAN,
c) 25 to 40 parts by weight polystyrene, PMMA, SAN, ABS or ASA, and
d) 2.5 to 10 parts by weight SEBS, in which
e) 0.25 to 6 parts by weight of at least one compound containing maleic acid or a maleic anhydride (MAH), a homopolymer or mixed polymer and/or graft polymer and/or at least one compound containing azidosulphobenzoic acid (ASB), a homopolymer or mixed polymer and/or graft polymer are contained, the constituents (d) and (e) preferably being a mixed polymer or a polymer mixture and/or graft polymer of SEBS and maleic acid, maleic anhydride (MAH) and/or ASB or one of the polymers thereof.

7. A plastics film according to one or more of Claims 1 to 6, characterised in that the film contains per 100 parts by weight of the plastics mixture (a), (b), (c), (d) and (e) 0 to 50 parts by weight, preferably 0.2 to 40 parts by weight, of at least one filler.

8. A plastics film according to one or more of Claims 1 to 7, characterised in that the plastics film contains 0.1 to 15 parts by weight, preferably 0.5 to 10 parts by weight, processing aids and/or additives (with the exception of fillers), preferably lubricants, dyes and/or coloured pigments, heat stabilisers, antioxidants, UV-stabilisers and/or flame retardants, per 100 parts by weight of the plastics mixture (a), (b), (c), (d) and (e).

9. A plastics film according to one or more of Claims 1 to 8, characterised in that a surface layer, preferably a paint or varnish surface layer or coloured paint or varnish surface layer, or at least one printed layer or colour printed layer and at least one transparent or translucent surface paint or varnish layer and/or surface film is applied to the plastics film.

10. A plastics film according to one or more of Claims 1 to 9, characterised in that the plastics film or printed plastics film contains a single-layer, dual-layer or triple-layer plastics upper film.

11. A plastics film according to one or more of Claims 1 to 10, characterised in that the plastics film before printing and/or coating is surface-treated or corona-treated and/or the plastics film is produced using a calender or extruder.

12. A method for processing a plastics film for furniture or parts of furniture, containing a polyolefin and also at least two other plastics materials which differ chemically and/or physically from the polyolefin, and also optionally pigments and/or dyes, processing aids, fillers and/or other additives, wherein the plastics film is applied with the joint use of an adhesive and/or a coating or primer layer applied to the reverse of the plastics film to the wooden part or the timber material, characterised in that the plastics film used consists of
a) 30 to 80 parts by weight propylene homopolymer and/or copolymer or mixtures or alloys of propylene homopolymer and/or copolymer with a polyethylene of high density (HDPE) or with a polyethylene of very low density (LLDPE),
b) 0 to 15 parts by weight of at least one grafted polypropylene or propylene copolymer, having a propylene or polypropylene content of more than 50% by weight (relative to 100 parts by weight of the grafted polypropylene or propylene copolymer), which contains as an additional constituent more than 8% by weight (relative to the grafted polymer (b)) styrene, methacrylic acid groups or methacrylic acid ester groups, acrylic acid groups or acrylic acid ester groups, acrylonitrile, styrene-acrylonitrile groups or one or more of these polymers or compounds as constituent (grafting constituent),
c) 10 to 45 parts by weight of a polymer or polymer mixture, selected from the group polystyrene, polymethyl methacrylate (PMMA), styrene-acrylonitrile copolymer or graft polymer (SAN), acrylonitrile-butadiene copolymer or graft polymer (ABS) and/or ASA, and
d) 1 to 15 parts by weight of a thermoplastic elastomer or elastomer mixture, selected from the group SEBS, PE-PP elastomer or EPM and/or EPDM, which
e) contains 0 to 10 parts by weight of at least one compound containing maleic acid or maleic anhydride (MAH), a homopolymer or mixed polymer and/or graft polymer and/or at least one compound containing azidosulphobenzoic acid (ASB), a homopolymer or mixed polymer and/or graft polymer or contains these plastics constituents, that the plastics film before processing and/or during application is heated and is applied to the prepared or pre-processed wooden part or timber material part, processed in the thermoforming process,
as plastics material or plastics content.

13. A method according to Claim 12, characterised in that the plastics film is heated and formed or preformed and is glued to the pre-processed, milled or profiled timber material part.

14. A method according to Claims 12 and 13, characterised in that a plastics film is used in which the grafted polypropylene copolymer (b) has a polypropylene content of 60 to 80% by weight (relative to 100 parts by weight of the grafted polypropylene copolymer (b)) and a polystyrene and/or PMMA and/or SAN content of 40 to 20% by weight, preferably 35 to 25% by weight.

15. A method according to one or more of Claims 12 to 14, characterised in that the plastics film used in the method (relative to the quantities by weight of the constituent (a)) contains 25 to 35 parts by weight (c) polystyrene, polymethyl methacrylate (PMMA), styrene-acrylonitrile copolymer or graft polymer (SAN), acrylonitrile-butadiene-styrene copolymer or graft polymer (ABS) and/or ASA.

16. A method according to one or more of Claims 12 to 15, characterised in that the plastics film (relative to the weight contents of the constituent (a)) (d) contains 2.5 to 10 parts by weight SEBS, PE-PP elastomer or EPM and/or EPDM, preferably SEBS, in which (e) 0.2 to 7 parts by weight of at least one compound containing maleic acid or maleic anhydride (MAH), a homopolymer or mixed polymer and/or graft polymer and/or at least one compound containing azidosulphobenzoic acid (ASB), a homopolymer or mixed polymer and/or graft polymer are contained, the constituents (d) and (e) preferably being a mixed polymer or a polymer mixture and/or a graft polymer of SEBS, PE-PP elastomer, EPM and/or EPDM and maleic acid, maleic anhydride (MAH) and/or ASB or one of the polymers thereof.

17. A method according to one or more of Claims 12 to 16, characterised in that the plastics film used contains as constituent (a) 30 to 80 parts by weight, preferably 35 to 75 parts by weight, of a mixture consisting of 55 to 92% by weight, preferably 60 to 85% by weight, propylene homopolymer and 45 to 8% by weight, preferably 40 to 15% by weight, HDPE and/or LLDPE, preferably HDPE.

18. A plastics film [sic] according to one or more of Claims 12 to 17, characterised in that in the method a plastics film is used which (relative to plastics material) consists of
a) 30 to 75 parts by weight (a), preferably PP and HDPE,
b) 0 to 10 parts by weight, preferably 0.1 to 9 parts by weight, grafted PP-polystyrene, PP-PMMA and/or PP-SAN,
c) 25 to 40 parts by weight polystyrene, PMMA, SAN, ABS or ASA, and
d) 2.5 to 10 parts by weight SEBS, in which
e) 0.25 to 6 parts by weight of at least one compound containing maleic acid or a maleic anhydride (MAH), a homopolymer or mixed polymer and/or graft polymer and/or at least one compound containing azidosulphobenzoic acid (ASB), a homopolymer or mixed polymer and/or graft polymer are contained, the constituents (d) and (e) preferably being a mixed polymer or a polymer mixture and/or graft polymer of SEBS and maleic acid, maleic anhydride (MAH) and/or ASB or one of the polymers thereof.

19. A method according to one or more of Claims 12 to 18, characterised in that the film used contains per 100 parts by weight of the plastics mixture (a), (b), (c), (d) and (e) 0 to 50 parts by weight, preferably 0.2 to 40 parts by weight, of at least one filler, and/or that the plastics film contains 0.1 to 15 parts by weight, preferably 0.5 to 10 parts by weight, processing aids and/or additives (with the exception of fillers), preferably lubricants, dyes and/or coloured pigments, heat stabilisers, antioxidants, UV-stabilisers and/or flame retardants, per 100 parts by weight of the plastics mixture (a), (b), (c), (d) and (e).

20. A method according to one or more of Claims 12 to 19, characterised in that a surface layer, preferably a paint or varnish surface layer or coloured paint or varnish surface layer, or at least one printed layer or colour printed layer and at least one transparent or translucent surface paint or varnish layer and/or plastics surface film is applied to the plastics film.

21. A method according to one or more of Claims 12 to 20, characterised in that the plastics film or printed plastics film is used in a composite with a single-layer, dual-layer or triple-layer plastics upper film.

22. A method according to one or more of Claims 12 to 21, characterised in that the plastics film before printing and/or coating is surface-treated or corona-treated and/or the plastics film is produced using a calender or extruder.

23. A method according to one or more of Claims 12 to 22, characterised in that the plastics film is processed with the application of heat and pressure and/or reduced pressure on a membrane forming press at temperatures of at least 90°C, preferably 100 to 180°C, and is joined to the wooden part or timber material part, preferably the profiled, milled, profile-milled or surface-treated timber material part or wooden part, with the joint use of adhesive, while maintaining a pressing and bonding time of 1/10 to 10 minutes, preferably 0.5 to 5 minutes.

24. A method according to one or more of Claims 12 to 23, characterised in that the plastics film is preformed at elevated temperatures in the thermoforming process and is applied to the wooden part or timber material part, preferably to the profiled, milled, profile-milled or surface-treated timber material part or wooden part, with or without the joint use of adhesive.

## Revendications

1. Feuille en matière synthétique pour meubles ou parties de meubles contenant une polyoléfine, ainsi qu'au moins deux autres matières synthétiques qui se distinguent chimiquement et/ou par leur propriétés physiques de la polyoléfine, ainsi que, le cas échéant, des pigments et/ou des colorants, des produits auxiliaires, des matières de charge et/ou d'autres additifs, caractérisée en ce que la feuille en matière synthétique, en tant que matière synthétique ou en tant que partie de matière synthétique, est composée de
a) 30 à 80 parties en poids d'un homo- et/ou copolymère de propylène ou de mélanges ou d'alliages d'un homo- et/ou copolymère de propylène avec un polyéthylène de haute densité (HDPE) ou un polyéthylène de très faible densité (LLDPE),
b) 0 à 15 parties en poids d'au moins un polypropylène ou copolymère de propylène implanté ou greffé avec une teneur en propylène ou polypropylène de plus de 50 % en poids (par rapport aux 100 parties en poids du polypropylène ou copolymère de propylène implanté ou greffé), qui contient à titre de constituant supplémentaire
c) 10 à 45 parties en poids d'un polymère ou d'un mélange de polymères, choisis parmi le groupe constitué de polystyrène, de polyméthacrylate de méthyle (PMMA), de copolymère ou polymère greffé de styrène et d'acrylonitrile (SAN), de copolymère ou polymère greffé d'acrylonitrile, de butadiène (ABS) et/ou d'ASA, et
d) 1 à 15 parties en poids d'un élastomère thermoplastique ou d'un mélange d'élastomères, choisis parmi le groupe constitué de SEBS, d'élastomère PE-PP ou d'EPM et/ou d'EPDM, qui contient
e) 0 à 10 parties en poids d'au moins un composé homo- ou copolymère et/ou polymère greffé contenant l'acide maléique ou l'anhydride maléique (MAH) et/ou au moins un composé homo- ou copolymère et/ou polymère greffé contenant l'acide azidosulfobenzoïque (ASB),
ou contient ces constituants de matière synthétique.

2. Feuille en matière synthétique selon la revendication 1, caractérisée en ce que le copolymère de polypropylène implanté ou greffé (b) a une teneur en polypropylène de 60 à 80 % en poids (par rapport aux 100 parties en poids du copolymère de polypropylène implanté ou greffé (b)) et une teneur en polystyrène et/ou PMMA et/ou SAN de 40 à 20 % en poids, de préférence de 35 à 25 % en poids.

3. Feuille en matière synthétique selon les revendications 1 et 2, caractérisée en ce que la feuille en matière synthétique contient (par rapport au poids du constituant (a)), (c) 25 à 40 parties en poids de polystyrène, de polyméthacrylate de méthyle (PMMA), de copolymère ou polymère greffé de styrène et d'acrylonitrile (SAN), de copolymère ou de polymère greffé d'acrylonitrile, de butadiène et de styrène (ABS) et/ou d'ASA.

4. Feuille en matière synthétique selon l'une ou plusieurs des revendications 1 à 3, caractérisée en ce que la feuille en matière synthétique contient (par rapport au poids du constituant (a)), (d) 2,5 à 10 parties en poids de SEBS, d'élastomère PE-PP ou d'EPM et/ou d'EPDM, de préférence de SEBS, où y sont contenus (e) 0,2 à 7 parties en poids d'au moins un composé homo- ou copolymère et/ou polymère greffé contenant l'acide maléique ou l'anhydride maléique (MAH) et/ou au moins un composé homo- ou copolymère et/ou polymère greffé contenant l'acide azidosulfobenzoïque (ASB), les constituants (d) et (e) étant de préférence un copolymère ou un mélange de polymères et/ou un polymère greffé de SEBS, d'élastomère PE-PP, d' EPM et/ou d'EPDM et d'acide maléique, d'anhydride maléique (MAH) et/ou d'ASB ou d'un de leurs polymères.

5. Feuille en matière synthétique selon l'une ou plusieurs des revendications 1 à 4, caractérisée en ce que la feuille en matière synthétique contient à titre de constituant (a) 30 à 80 parties en poids, de préférence 35 à 75 parties en poids, d'un mélange constitué de 55 à 92 % en poids, de préférence 60 à 85 %, d'un homopolymère de propylène, et de 45 à 8 % en poids, de préférence 40 à 15 % en poids, de HDPE et/ou de LLDPE, de préférence de HDPE.

6. Feuille en matière synthétique selon l'une ou plusieurs des revendications 1 à 5, caractérisée en ce que la feuille en matière synthétique est constituée de (par rapport à la matière synthétique)
a) 30 à 75 parties en poids de (a), de préférence de PP et de HDPE,
b) 0 à 10 parties en poids, de préférence 0,1 à 9 parties en poids, de polymère greffé de PP-polystyrène, de PP-PMMA et/ou de PP-SAN,
c) 25 à 40 parties en poids de polystyrène, de PMMA, de SAN, d'ABS ou d'ASA et
d) 2,5 à 10 parties en poids de SEBS, où y sont contenus
e) 0,25 à 6 parties en poids d'au moins un composé homo- ou copolymère et/ou polymère greffé contenant l'acide maléique et/ou l'anhydride maléique, et/ou au moins un composé homo- ou copolymère et/ou polymère greffé contenant l'acide azidosulfobenzoïque (ASB), les constituants (d) et (e) étant de préférence un copolymère ou un mélange de polymères et/ou un polymère greffé de SEBS et d'acide maléique, d'anhydride maléique (MAH) et/ou d'ASB ou d'un de leurs polymères.

7. Feuille en matière synthétique selon l'une ou plusieurs des revendications 1 à 6, caractérisée en ce que la feuille contient pour 100 parties en poids du mélange de matières synthétiques (a), (b), (c), (d) et (e) 0 à 50 parties en poids, de préférence 0,2 à 40 parties en poids, d'au moins une matière de charge.

8. Feuille en matière synthétique selon l'une ou plusieurs des revendications 1 à 7, caractérisée en ce que la feuille en matière synthétique contient pour 100 parties en poids du mélange de matières synthétiques (a), (b), (c), (d) et (e) 0,1 à 15 parties en poids, de préference 0,5 à 10 parties en poids, de produits auxiliaires et/ou d'additifs (à l'exception de matières de charge), de préférence des lubrifiants, des colorants et/ou des pigments, des produits de stabilisation thermique, des antioxidants, des produits de stabilisation aux UV et/ou des agents ignifuges.

9. Feuille en matière synthétique selon l'une ou plusieurs des revendications 1 à 8, caractérisée en ce sur la feuille en matière synthétique est appliquée une couche superficielle, de préférence une couche de vernis ou de vernis coloré, ou au moins une couche imprimée ou une couche imprimée couleur et au moins une couche superficielle de vernis et/ou feuille superficielle transparente ou translucide.

10. Feuille en matière synthétique selon l'une ou plusieurs des revendications 1 à 9, caractérisée en ce que la feuille en matière synthétique ou la feuille en matière synthétique imprimée contient une feuille superficielle en matière synthétique à une, deux ou trois couches.

11. Feuille en matière synthétique selon l'une ou plusieurs des revendications 1 à 10, caractérisée en ce que la feuille en matière synthétique est traitée en surface ou par fil coronaire avant l'impression et/ou le revêtement et/ou en ce que la feuille en matière synthétique est fabriquée par calandrage ou extrusion.

12. Procédé de fabrication d'une feuille en matière synthétique pour meubles ou parties de meubles contenant une polyoléfine, ainsi qu'au moins deux autres matières synthétiques qui se distinguent chimiquement et/ou par leurs propriétés physiques de la polyoléfine, ainsi que, le cas échéant, des pigments et/ou des colorants, des produits auxiliaires, des matières de charge et/ou d'autres additifs, la feuille en matière synthétique étant appliquée sur la pièce en bois ou en matériau dérivé du bois à l'aide une colle et/ou d'un revêtement ou d'une première couche appliquée sur le dos de la feuille en matière synthétique, caractérisé en ce que la feuille en matière synthétiquw utilisée en tant que matière synthétique ou partie de matière synthétique, est composée de
a) 30 à 80 parties en poids d'un homo- et/ou copolymère de propylène ou de mélanges ou d'alliages d'un homo- et/ou copolymère de propylène avec un polyéthylène de haute densité (HDPE) ou un polyéthylène de très faible densité (LLDPE),
b) 0 à 15 parties en poids d'au moins un polypropylène ou copolymère de propylène implanté ou greffé avec une teneur en propylène ou polypropylène de plus de 50 % en poids (par rapport aux 100 parties en poids du polypropylène ou copolymère de propylène implanté ou greffé) qui contient à titre de constituant supplémentaire des groupements de styrène, d'acide méthacrylique ou d'ester d'acide méthacrylique, des groupements d'acide acrylique ou d'ester d'acide acrylique, des groupements d'acrylonitrile de styrène-acrylonitrile ou un ou plusieurs de ces polymères ou composés à titre de constituant (constituant greffé) à raison de plus de 8 % en poids (par rapport au polymère implanté ou greffé (b)),
c) 10 à 45 parties en poids d'un polymère ou d'un mélange de polymères, choisis parmi le groupe constitué de polystyrène, de polyméthacrylate de méthyle (PMMA), de copolymère ou polymère greffé de styrène et d'acrylonitrile (SAN), de copolymère ou polymère greffé d'acrylonitrile, de butadiène et de styrène (ABS) et/ou d'ASA et
d) 1 à 15 parties en poids d'un élastomère thermoplastique ou mélange d'élastomères, choisis parmi le groupe constitué de SEBS, d'élastomère PE-PP ou d'EPM et/ou d'EPDM, qui contient
e) 0 à 10 parties en poids d'au moins un composé homo- ou copolymère et/ou polymère greffé contenant l'acide maléique ou l'anhydride maléique (MAH) et/ou au moins un composé homo- ou copolymère et/ou polymère greffé contenant l'acide azidosulfobenzoïque (ASB) ou contient ces constituants, caractérisé en ce que la feuille en matière synthétique est chauffée avant le traitement et/ou à l'application et appliquée sous forme transformée par un procédé de thermoformage sur la pièce en bois ou en matériau dérivé du bois préparée ou préusinée.

13. Procédé selon la revendication 12, caractérisé en ce que la feuille en matière synthétique est chauffée et formée ou préformée et collée sur la pièce en matériau dérivé du bois préusinée, fraisée ou profilée.

14. Procédé selon les revendications 12 et 13, caractérisé en ce qu'une feuille en matière synthétique est utilisée, pour laquelle le copolymère de polypropylène implanté ou greffé (b) a une teneur en polypropylène de 60 à 80 % en poids (par rapport aux 100 parties en poids du copolymère de polypropylène implanté ou greffé (b)) et une teneur en polystyrène et/ou PMMA et/ou SAN de 40 à 20 % en poids, de préférence de 35 à 25 % en poids.

15. Procédé selon l'une ou plusieurs des revendications 12 à 14, caractérisé en ce que la feuille en matière synthétique utilisée dans ce procédé contient (par rapport au poids du constituant (a)), (c) 25 à 35 parties en poids de polystyrène, de polyméthacrylate (PMMA), de copolymère ou polymère greffé de styrène et d'acrylonitrile (SAN), de copolymère ou polymère greffé d'acrylonitrile, de butadiène et de styrène (ABS) et/ou d'ASA.

16. Procédé selon l'une ou plusieurs des revendications 12 à 15, caractérisé en ce que la feuille en matière synthétique contient (par rapport au poids du constituant (a)), (d) 2,5 à 10 parties en poids de SEBS, d'élastomère PE-PP ou d'EPM et/ou d'EPDM, de préférence de SEBS, dans laquelle (e) sont contenus au moins 0,2 à 7 parties en poids d'au moins un composé homo- ou copolymère et/ou polymère greffé contenant l'acide maléique ou l'anhydride maléique (MAH), et/ou au moins un composé homo- ou copolymère et/ou polymère greffé contenant l'acide azidosulfobenzoïque (ASB), les constituants (d) et (e) étant de préférence un copolymère ou un mélange de polymères et/ou un polymère greffé de SEBS, d'élastomère PE-PP, d'EPM et/ou d'EPDM et d'acide maléique, d'anhydride maléique (MAH) et/ou d'ASB ou d'un de leurs polymères.

17. Procédé selon l'une ou plusieurs des revendications 12 à 16, caractérisé en ce que la feuille en matière synthétique utilisée contient à titre de constituant (a) 30 à 80 parties en poids, de préférence 35 à 75 parties en poids, d'un mélange composé de 55 à 92 % en poids, de préférence 60 à 85 % en poids, d'un homopolymère de propylène et de 45 à 8 % en poids, de préférence 40 à 15 % en poids, de HDPE et/ou de LLDPE, de préférence de HDPE.

18. Feuille en matière synthétique selon l'une ou plusieurs des revendications 12 à 17, caractérisé en ce que pour le procédé est utilisée une feuille en matière synthétique qui est constituée de (par rapport à la matière synthétique)
a) 30 à 75 parties en poids de (a), de préférence de PP et de HDPE,
b) 0 à 10 parties en poids, de préférence 0,1 à 9 parties en poids, de polymère greffé PP-polystyrène, de PP-PMMA et/ou de PP-SAN,
c) 25 à 40 parties en poids de polystyrène, de PMMA, de SAN, d' ABS ou d'ASA et
d) 2,5 à 10 parties en poids de SEBS, où y sont contenus
e) 0,25 à 6 parties en poids d'au moins un composé homo- ou copolymère et/ou polymère greffé contenant l'acide maléique ou l'anhydride maléique, et/ou au moins un composé homo- ou copolymère et/ou polymère greffé contenant l'acide azidosulfobenzoïque (ASB), les constituants (d) et (e) étant de préférence des copolymères ou un mélange de polymères et/ou des polymères greffés de SEBS et d'acide maléique, d'anhydride maléique (MAH) et/ou d'ASB ou d'un de leurs polymères.

19. Procédé selon l'une ou plusieurs des revendications 12 à 18, caractérisé en ce que la feuille utilisée contient pour 100 parties en poids du mélange de matières synthétiques (a), (b), (c), (d) et (e) 0 à 50 parties en poids, de préférence 0,2 à 40 parties en poids, d'au moins une matière de charge et/ou en ce que la feuille en matière synthétique contient pour 100 parties en poids du mélange de matières synthétiques (a), (b), (c), (d) et (e) 0,1 à 15 parties en poids, de préférence 0,5 à 10 parties en poids, de produits auxiliaires et/ou d'additifs (à l'exception des matières de charge), de préférence des lubrifiants, des colorants et/ou des pigments colorés, des produits de stabilisation thermique, des antioxidants, des produits de stabilisation aux UV et/ou des agents ignifuges.

20. Procédé selon l'une ou plusieurs des revendications 12 à 19, caractérisé en ce que sur la feuille en matière synthétique est appliquée une couche superficielle, de préférence une couche de vernis superficielle ou de vernis coloré superficielle, ou au moins une couche imprimée ou imprimée couleur et au moins une couche de vernis superficielle et/ou feuille superficielle en matière synthétique transparente ou translucide.

21. Procédé selon l'une ou plusieurs des revendications 12 à 20, caractérisé en ce que la feuille en matière synthétique ou feuille en matière synthétique imprimée est utilisée de pair avec une feuille superficielle en matière synthétique à une, deux ou trois couches.

22. Procédé selon l'une ou plusieurs des revendications 12 à 21, caractérisé en ce que la feuille en matière synthétique est, avant l'impression et/ou le revêtement, traitée en surface ou par fil coronaire et/ou en ce que la feuille en matière synthétique est fabriquée par calandrage ou extrusion.

23. Procédé selon l'une ou plusieurs des revendications 12 à 22, caractérisé en ce que la feuille en matière synthétique est fabriquée sous l'influence de chaleur et de pression et/ou du vide partiel dans une presse pour membranes à des températures d'au moins 90 °C, de préférence entre 100 et 180 °C, et en ce que la feuille en matière synthétique est liée en utilisant une colle, tout en respectant des durées de pression et de collage de 1/10 à 10 min., de préférence 0,5 à 5 min., sur la pièce en bois ou en matériau dérivé du bois, de préférence sur la pièce en bois ou en matériau dérivé du bois profilée, fraisée, profilée à la fraise ou traitée en surface.

24. Procédé selon l'une ou plusieurs des revendications 12 à 23, caractérisé en ce que la feuille en matière synthétique est préformée à des températures élevées par un procédé d'emboutissage profond et appliquée sans ou avec l'aide d'une colle sur la pièce en bois ou en matériau dérivé du bois, de préférence sur la pièce en bois ou en matériau dérivé du bois profilée, fraisée, profilée à la fraise ou traitée en surface.
